Europäisches Patentamt

European Patent Office

Office européen des brevets

(19)

(11) Veröffentlichungsnummer: **0 081 738**
**B1**

# (12) EUROPÄISCHE PATENTSCHRIFT

(45) Veröffentlichungstag der Patentschrift:
20.03.85

(51) Int. Cl.⁴: **C 09 K 5/00**

(21) Anmeldenummer: **82111062.4**

(22) Anmeldetag: **30.11.82**

(54) **Nitritfreie Kühlflüssigkeiten auf der Basis von Glykolen.**

(30) Priorität: **05.12.81 DE 3148230**

(43) Veröffentlichungstag der Anmeldung:
**22.06.83 Patentblatt 83/25**

(45) Bekanntmachung des Hinweises auf die Patenterteilung:
**20.03.85 Patentblatt 85/12**

(84) Benannte Vertragsstaaten:
**AT BE CH DE FR GB IT LI NL SE**

(56) Entgegenhaltungen:
**EP - A - 0 032 246
DE - A - 2 540 251
US - A - 2 172 075**

(73) Patentinhaber: **HOECHST AKTIENGESELLSCHAFT,
Postfach 80 03 20, D-6230 Frankfurt am Main 80 (DE)**

(72) Erfinder: **Peters, Heinrich, Dr., Robert-Koch-Strasse 201,
D-8263 Burghausen/Salzach (DE)**
Erfinder: **Minks, Peter, Franz-Werfel-Strasse 2b,
D-8262 Altötting (DE)**
Erfinder: **Surma, Erich, Hüttweg 49, D-8268 Garching/Alz
(DE)**

## Beschreibung

Die Erfindung betrifft eine Kühlflüssigkeit auf der Basis von Glykolen, die frei von Nitriten ist und auch keine Phosphate und Amine enthält und eine hervorragende Korrosionsinhibierung gegenüber den verschiedensten metallischen Werkstoffen besitzt.

Zum frostsicheren Kühlen von technischen Einrichtungen, insbesondere von Kraftfahrzeugmotoren, werden bekanntlich Flüssigkeiten auf der Basis von Glykolen eingesetzt. Um die Werkstoffe des Kühlsystems vor Korrosion zu schützen, enthalten diese Flüssigkeiten jeweils wirksame Mengen von einem oder von mehreren Korrosionsinhibitoren.

Zu den am meisten verwendeten Korrosionsinhibitoren zählen die Alkalisalze von Borsäuren, Phosphorsäuren, Kieselsäuren, Alkalicarbonate, Alkalihydroxide, Alkalisalze der Benzoesäure, Alkalinitrite, Alkalinitrate, Amine, Alkanolamine und Triazole. Unter diesen Inhibitoren besitzen vor allem die Nitrite eine besonders wirksame Korrosionsinhibierung gegenüber Eisen, so dass sie in nahezu allen Gefrierschutzmitteln vorliegen, die in Kühlsystemen aus Gusseisen oder Stahl eingesetzt werden. Dies bringt aber den grossen Nachteil mit sich, dass eine solche Kühlflüssigkeit nicht mit Flüssigkeiten vermischt werden kann, die Amine, Aminoalkohole und/oder deren Salze als Korrosionsinhibitoren enthalten, weil bekanntlich Nitrite mit verschiedenen Aminen unter Bildung von giftigen Nitroaminen reagieren.

Es hat deshalb nicht an Versuchen gefehlt, Kühlflüssigkeiten auf der Basis von Glykolen zu schaffen, die auch ohne den Einsatz von Nitriten eine gute Korrosionsinhibierung aufweisen.

In der US-PS Nr. 2172075 und in der russischen PS Nr. 675065 werden nitritfreie Frostschutzmittel auf der Basis von Glykolen wie Monoethylenglykol beschrieben. Die Flüssigkeiten gemäss der russischen Patentschrift enthalten als Inhibitoren 3,5-Natriumdinitrobenzoat und Benztriazol, und jene gemäss der US-Patentschrift aromatische Nitrocarbonsäuren, Nitrocarbonsäurederivate und/oder deren Alkali- oder Aminsalze, wie ortho-, meta- und para-Nitrobenzoesäure, 3,5-Dinitrobenzoesäure, 3-Nitrophthalsäure und para-Nitrophenylessigsäure, gegebenenfalls gemeinsam mit anderen üblichen Korrosionsinhibitoren wie Natriumnitrat, Natriumnitrit, Natriumcarbonat und Natriumhydroxid.

Aus der europäischen Patentanmeldung Nr. 0026709 ist eine Flüssigkeit bekannt, die insbesondere als flammsichere, frostsichere und oxidationsstabile Hydraulikflüssigkeit dient. Sie besteht im wesentlichen aus relativ hochmolekularen Glykolen als Hauptbestandteil und einer wirksamen Menge von einer einkernigen, aromatischen Verbindung mit mindestens einer Nitrogruppe, wie Nitrobenzoesäuren, Nitrophthalsäuren, Nitroisophthalsäuren sowie deren Alkali- und Ammoniumsalze.

Alle diese bekannten Flüssigkeiten besitzen aufgrund der Nitroverbindungen einen relativ guten Korrosionsschutz gegenüber Eisen. Bei anderen metallischen Werkstoffen wie Buntmetallen und Leichtmetallen ist jedoch die angegebene Inhibierung noch nicht wirksam genug.

In der DE-OS Nr. 3000687 wird ein nitritfreies Kühlerschutzmittel für wasserhaltige Kühlflüssigkeiten auf Basis Ethylenglykol oder Propylenglykol beschrieben. Es besteht im wesentlichen aus Glykolen als Hauptbestandteil, 0,05 bis 5 Gew.-%, bezogen auf das Glykol, von einer im Kern substituierten Benzoesäure mit einem $pK_a$-Wert < 3, vorzugsweise ortho- und/oder para-Nitrobenzoesäure, und aus 4 bis 5 weiteren, als Korrosionsinhibitoren an sich bekannten Verbindungen, nämlich Alkalibenzoat, Borax, Alkalisilicat, Alkalinitrat und gegebenenfalls Benztriazol.

Wie aus den Beispielen a, b und c ersichtlich ist, kommt in diesem Inhibitorsystem dem Alkalibenzoat, das jeweils in einer relativ grossen Menge eingesetzt wird, offensichtlich eine besondere Bedeutung zu. Es fällt ferner auf, dass das Alkalisilicat in allen Formulierungen nur in einer relativ geringen Menge vorliegt.

Dieses Kühlmittel besitzt, verglichen mit den in den obengenannten Druckschriften beschriebenen Flüssigkeiten, aufgrund des besseren Inhibitorsystems zwar einen etwas wirksameren Korrosionsschutz, es ist jedoch noch immer nicht zufriedenstellend.

Aufgabe der Erfindung ist es daher, eine Kühlflüssigkeit auf der Basis von Glykolen zu schaffen, die frei von Nitriten ist und eine gute Korrosionsinhibierung sowohl gegenüber Werkstoffen aus Eisen und Eisenlegierungen als auch gegenüber Buntmetallen und Leichtmetallen aufweist.

Die erfindungsgemässe Kühlflüssigkeit besteht aus

a) 0,5 bis 2,5 Gew.-% Mono- und/oder Polynitrobenzoesäuren,

b) 0,05 bis 0,4 Gew.-% Alkalinitrat,

c) 0,25 bis 2,5 Gew.-% Alkalisalze von Borsäuren,

d) 0,07 bis 0,3 Gew.-% Alkalisalze von Kieselsäuren,

e) 0,05 bis 2 Gew.-% alkalische Verbindungen, ausgewählt aus der Gruppe bestehend aus Alkalicarbonaten und Alkalihydroxiden,

f) 0,01 bis 0,2 Gew.-% Benztriazol und/oder Tolyltriazol,

g) Rest Ethylenglykole und/oder Propylenglykole mit 1 bis 3 Oxethylen- bzw. Oxpropyleneinheiten und gegebenenfalls geringen Mengen Wasser als Lösungsvermittler (Gewichtsprozente jeweils bezogen auf das Gewicht der Kühlflüssigkeit, das heisst auf die gesamte Kühlflüssigkeit).

Als Mono- und/oder Polynitrobenzoesäuren werden vorzugsweise Mono- und/oder Dinitrobenzoesäuren wie ortho-, meta- und para-Nitrobenzoesäure, 2,4-Dinitrobenzoesäure, 3,5-Dinitrobenzoesäure und 2,6-Dinitrobenzoesäure eingesetzt. Besonders bevorzugt sind die Mononitrobenzoesäuren, nämlich die ortho-, meta- und para-Nitrobenzoesäure.

Als Alkalisalze von Borsäuren werden vorzugsweise Alkalimetaborate, Alkaliborate und/oder Al-

kalitetraborate (mit oder ohne Kristallwasser) eingesetzt. Besonders bevorzugt ist das Alkalitetraborat Borax.

Als Alkalisalze von Kieselsäuren werden vorzugsweise Alkalimetasilicate und/oder Alkalipolysilicate mit 2 bis 5 Siliciumatomen eingesetzt. Besonders bevorzugt sind die Alkalimetasilicate ($Me_2SiO_3$), die Alkalidisilicate ($Me_2Si_2O_5$), die Alkalitrisilicate ($Me_2Si_3O_7$, Me = Alkalimetall) und/oder Wasserglas.

Als alkalische Verbindungen werden vorzugsweise Alkalihydroxide eingesetzt.

Unter den erfindungsgemäss einzusetzenden Alkaliverbindungen sind die Kalium- und Natriumverbindungen bevorzugt.

Die alkalischen Verbindungen dienen insbesondere zur Neutralisation der Nitrobenzoesäure (Komponente a). Die erfindungsgemässe Kühlflüssigkeit weist in Verdünnung mit Wasser im Verhältnis 1:2 einen pH-Wert von 7,5 bis 9, vorzugsweise von 8 bis 8,5 auf.

Als Ethylenglykole und/oder Propylenglykole mit 1 bis 3 Oxethylen- bzw. Oxpropyleneinheiten werden vorzugsweise Ethylenglykol, Diethylenglykol, Propylenglykol und/oder Dipropylenglykol eingesetzt. Besonders bevorzugt sind Ethylenglykol und/oder Propylenglykol.

Die Glykole bilden den Hauptbestandteil der erfindungsgemässen Kühlflüssigkeit. Ihre Menge beträgt im allgemeinen 90 bis 98 Gew.-%, vorzugsweise 93 bis 97 Gew.-%, bezogen auf das Gewicht der Kühlflüssigkeit.

Wasser wird lediglich in der Menge eingesetzt, in der es als Lösungsvermittler, wenn überhaupt, erforderlich ist. Dabei handelt es sich um jeweils relativ geringe Wassermengen. Wird beispielsweise Borax ($Na_2B_2O_7 \cdot 10\ H_2O$) als Komponente b verwendet, so wird auch damit gegebenenfalls erforderliches Wasser eingebracht. Wasser als Lösungsvermittler für die einzelnen Komponente kann beispielsweise auch dadurch eingebracht werden, dass die Alkalihydroxide (Komponente e) in Form einer zweckmässigerweise etwa 50 gew.-%igen wässerigen Lösung zugesetzt werden.

Die Menge an Wasser, die zweckmässigerweise so klein wie möglich gehalten wird, beträgt im allgemeinen 0,5 bis 4 Gew.-%, vorzugsweise 1 bis 3 Gew.-%, bezogen auf das Gewicht der Kühlflüssigkeit.

Demnach besteht eine bevorzugte erfindungsgemässe Kühlflüssigkeit im wesentlichen aus
a) 0,8 bis 1,5 Gew.-% Mono- und/oder Dinitrobenzoesäure,
b) 0,1 bis 0,3 Gew.-% Alkalinitrat,
c) 0,5 bis 1,5 Gew.-% Alkalimetaborate, Alkaliborate und/oder Alkalitetraborate,
d) 0,1 bis 0,2 Gew.-% Alkalimetasilicate und/oder Alkalipolysilicate mit 2 bis 5 Siliciumatomen,
e) 0,1 bis 1,0 Gew.-% Alkalihydroxide,
f) 0,05 bis 0,15 Gew.-% Benztriazol und/oder Tolyltriazol,
g) Rest Ethylenglykol, Diethylenglykol, Propylenglykol und/oder Dipropylenglykol und gegebenenfalls geringen Mengen an Wasser als Lösungsvermittler (Gewichtsprozente jeweils bezogen auf das Gewicht der Kühlflüssigkeit).

Eine besonders bevorzugte erfindungsgemässe Kühlflüssigkeit besteht im wesentlichen aus
a) 0,8 bis 1,5 Gew.-% ortho-, meta- und/oder para-Nitrobenzoesäure,
b) 0,1 bis 0,3 Gew.-% Natriumnitrat,
c) 0,5 bis 1,5 Gew.-% Borax,
d) 0,1 bis 0,2 Gew.-% Natriummetasilicat, Natriumdisilicat, Natriumtrisilicat und/oder Wasserglas,
e) 0,1 bis 1,0 Gew.-% Natriumhydroxid,
f) 0,05 bis 0,15 Gew.-% Benztriazol und/oder Tolyltriazol,
g) Rest Ethylenglykol, Propylenglykol und gegebenenfalls geringen Mengen Wasser als Lösungsvermittler (Gewichtsprozente jeweils bezogen auf das Gewicht der Kühlflüssigkeit).

Die erfindungsgemässe Kühlflüssigkeit kann zusätzlich zu den Komponenten a bis g auch noch zweckmässige Additive wie Antischaummittel und Antikavitationsmittel in jeweils wirksamen Mengen enthalten.

Die Herstellung der erfindungsgemässen Kühlflüssigkeit erfolgt einfach durch Zusammenmischen der einzelnen Komponenten. Dies kann beispielsweise in einem mit Rührer ausgestatteten Behälter vorgenommen werden.

Bei der Anwendung der neuen Kühlflüssigkeit (Kühlflüssigkeitkonzentrat), vorzugsweise in Kühlsystemen von Kraftfahrzeugmotoren wird sie zweckmässigerweise mit Wasser im Verhältnis von 1:1 bis 1:3 verdünnt.

Die Erfindung wird nun anhand von Beispielen noch näher erläutert:

*Beispiele 1 bis 11*

In der nachstehenden Tabelle I sind 11 verschiedene erfindungsgemässe Kühlflüssigkeiten angegeben (hergestellt durch Mischen der angeführten Komponenten).

*Vergleichsbeispiele I bis III*

In der nachstehenden Tabelle II sind die Kühlflüssigkeiten gemäss den Beispielen a, b und c der DE-OS Nr. 3000687 (nächstliegender Stand der Technik) angegeben.

Die antikorrosive Wirkung (der Korrosionsschutz) der erfindungsgemässen Kühlflüssigkeiten und jener gemäss dem nächstliegenden Stand der Technik wurde nach ASTM-D-1384-70 und mittels eines sogenannten Heisskorrosionstestes geprüft.

Bei der ASTM-D-1384-70-Methode handelt es sich bekanntlich um einen statischen Korrosionstest. Um eine praxisnähere Prüfung durchzuführen, wurde ein sogenannter Heisskorrosionstest herangezogen. Während bei der ASTM-D-1384-70-Methode die zu prüfende Kühlflüssigkeitslösung erhitzt wird und die eingebrachten Testmetalle somit nur die Temperatur der Flüssigkeit annehmen, werden beim Heisskorrosionstest die Testmetalle erhitzt und die zu prüfende Kühlflüssigkeitslösung über die heissen Metalle geführt.

Beim Heisskorrosionstest wurde im Rahmen der vorliegenden Prüfung als Metall Aluminium 99,5 eingesetzt, das auf eine Temperatur von 135 °C erhitzt wurde. Der Durchsatz an Kühlflüssigkeitslösung betrug jeweils 180 l/h und die Prüfdauer 50 h. Als Beurteilungskriterium wurde, analog zur ASTM-D-1384-70, der Metallbetrag ermittelt, und zwar in Milligramm pro Quadratzentimeter (in 50 h).

Beim Heisskorrosionstest wurde die Konzentration von 25 Vol.-% Kühlflüssigkeit (Kühlflüssigkeitskonzentrat) in Wasser nach ASTM-D-1384-70 und beim ASTM-Test neben dieser Konzentration auch noch die vorgeschriebene Konzentration von 34 Vol.-% genommen.

Die Kühlflüssigkeiten der erfindungsgemässen Beispiele 1 bis 11 und die Kühlflüssigkeiten gemäss den Vergleichsbeispielen I bis III wurden auch auf ihre antikavitative Wirkung (Kavitationsschutz) untersucht. Diese Prüfung erfolgte nach den Vorschriften der Forschungsvereinigung Verbrennungskraftmaschinen e.V. Frankfurt/Main, Bundesrepublik Deutschland. Diese Vorschriften sind in den Richtlinien zur „Prüfung der Eignung von Kühlmittelzusätzen für die Kühlflüssigkeiten von Verbrennungsmotoren", Heft R 315, Jahr 1977, beschrieben.

Entsprechend dieser Prüfmethode wurde die Gewichtsabnahme von Prüfkörpern aus der Aluminiumlegierung AlCuMg₂ und aus Gusseisen GG25 gemessen. Je ein Prüfkörper wurde in der zu testenden Flüssigkeit in einer Ultraschallapparatur der Schwingungskavitation ausgesetzt, wobei die Schwingungsfrequenz 20 kHz ±250 Hz und Amplitude der Schwingung am Prüfkörper 20 μm

beträgt, und die Temperatur der Kühlflüssigkeit bei 80 °C ±1 liegt. Entsprechend den genannten Vorschriften wurden jeweils 4000 ml Flüssigkeit eingesetzt, die dadurch bereitet worden ist, dass die Kühlflüssigkeit gemäss den Beispielen und Vergleichsbeispielen mit Wasser 1 : 10 verdünnt wurde (Konzentration von 10 Vol.-%). Die Prüfkörper wurden achtmal hintereinander, nach jeweils 10 min Behandlung in der genannten Ultraschallapparatur, gewogen. Die Auswertung der acht Wägungen pro Prüfkörper und pro Kühlflüssigkeit erfolgte ebenfalls nach den genannten Vorschriften. Danach werden die ersten vier Wägungen nicht berücksichtigt. Von den restlichen vier Werten wird der höchste und der niedrigste Wert ebenfalls nicht berücksichtigt. Aus den verbleibenden zwei Werten wird das arithmetische Mittel gebildet. Dieser Gewichtswert, ausgedrückt in Milligramm pro Stunde, stellt das Testergebnis, nämlich die Gewichtsabnahme des Prüfkörpers, dar.

In den nachstehenden Tabellen III und IV sind die Ergebnisse der Korrosionsschutz- und Kavitationsschutzprüfung der Kühlflüssigkeiten der erfindungsgemässen Beispiele 1 bis 11 und der Vergleichsbeispiele I bis III angegeben.

Wie die Ergebnisse zeigen, weist das erfindungsgemässe Frostschutzmittel einen gleichmässigeren Korrosionsschutz bei Gusseisen und Aluminiumguss auf als die Flüssigkeiten gemäss dem Stand der Technik. Der unerwartet gute Korrosionsschutz dürfte auf einem synergistischen Effekt beruhen, der gerade von der erfindungsgemässen Formulierung ausgeht.

Wie die Ergebnisse ferner zeigen, weisen die erfindungsgemässen Kühlflüssigkeiten auch einen wirksamen Kavitationsschutz auf.

*Tabelle I*

Erfindungsgemässe Beispiele 1 bis 11

| Beispiel Nr. | 1 | 2 | 3 | 4 | 5 | 6 | 7 | 8 | 9 | 10 | 11 |
|---|---|---|---|---|---|---|---|---|---|---|---|
| Monoethylenglykol | 93,78 | 97,24 | 95,62 | 93,17 | 95,19 | 95,27 | 96,43 | 93,95 | 96,544 | 95,879 | 94,45 |
| Wasser | 0,5 | 0,5 | 0,5 | 0,5 | 0,5 | 0,5 | 0,5 | 0,5 | 0,5 | 0,5 | 0,5 |
| Natriumnitrat | 0,4 | 0,05 | 0,3 | 0,1 | 0,2 | 0,2 | 0,2 | 0,2 | 0,2 | 0,2 | 0,2 |
| Borax · 10 H₂O | 4,5 | 0,5 | 1,0 | 3,0 | 2,0 | 2,0 | 2,0 | 2,0 | 2,0 | 2,0 | 2,0 |
| Natriummetasilicat | 0,1 | — | 0,2 | 0,07 | — | — | 0,15 | — | — | — | 0,15 |
| Natriumdisilicat | — | — | — | — | — | 0,07 | — | — | 0,07 | — | — |
| Wasserglas 60%ig* | — | 0,30 | — | — | 0,15 | — | — | 0,15 | — | 0,15 | — |
| Ätznatron 100%ig | 0,12 | 0,26 | 0,37 | 0,46 | 0,36 | 0,36 | 0,12 | 0,6 | 0,086 | 0,171 | 0,6 |
| Benztriazol | 0,1 | 0,15 | 0,01 | 0,2 | 0,1 | 0,1 | 0,1 | 0,1 | 0,1 | 0,1 | 0,1 |
| o-Nitrobenzoesäure | — | 1,0 | — | — | — | — | 0,5 | — | — | — | — |
| m-Nitrobenzoesäure | 0,5 | — | — | — | — | 1,5 | — | — | — | — | — |
| p-Nitrobenzoesäure | — | — | — | — | 1,5 | — | — | 2,5 | — | — | 2,0 |
| 2,4-Dinitrobenzoesäure | — | — | — | 2,5 | — | — | — | — | 0,5 | — | — |
| 3,5-Dinitrobenzoesäure | — | — | 2,0 | — | — | — | — | — | — | 1,0 | — |

* d.h.: 60%ige wässerige Lösung

### Tabelle II

Vergleichsbeispiele I bis III;
sie entsprechen den Beispielen a, b und c
der DE-OS Nr. 3000687

| Beispiel Nr. | I | II | III |
|---|---|---|---|
| Monoethylenglykol | 94,9 | 94,15 | 93,7 |
| Wasser | — | — | 2,0 |
| Natriumnitrat | 0,1 | 0,05 | 0,1 |
| Borax · 10 $H_2O$ | 1,4 | 0,7 | 2,0 |
| Natriummetasilicat · 5 $H_2O$ | 0,05 | 0,05 | — |
| Kaliummetasilicat | — | — | 0,05 |
| Benztriazol | — | 0,07 | — |
| Natriumbenzoat | 2,5 | 3,0 | 2,5 |
| o-Nitrobenzoesäure | — | — | — |
| p-Nitrobenzoesäure | 1,0 | 2,0 | — |
| o- und p-Nitrobenzoesäure (1:1) | — | — | 0,05 |

### Tabelle III

Ergebnisse vom Korrosionstest nach ASTM-D-1384-70 bei den erfindungsgemässen Beispielen 1 bis 11
und bei den Vergleichsbeispielen I bis III, Gewichtsverlust (g/m²)

| Beispiel Nr. | 1 | 2 | 3 | 4 | 5 | 6 | 7 | 8 | 9 | 10 | 11 | I | II | III |
|---|---|---|---|---|---|---|---|---|---|---|---|---|---|---|
| **Konzentration: 34 Vol.-%** | | | | | | | | | | | | | | |
| Kupfer | 0,9 | 1,3 | 1,3 | 1,0 | 1,2 | 1,0 | 0,2 | 0,9 | 0,9 | 0,6 | 0,9 | 17,1 | 1,7 | 2,1 |
| Weichlot 30 | 5,2 | 3,8 | 6,3 | 2,6 | 5,3 | 3,4 | 5,7 | 4,2 | 9,0 | 3,5 | 5,7 | 9,5 | 5,3 | 4,3 |
| Messing | 1,1 | 1,6 | 1,1 | 0,8 | 1,6 | 1,1 | 0,7 | 0,9 | 1,1 | 1,3 | 1,4 | 20,1 | 1,6 | 2,7 |
| Stahl | 0,4 | 1,1 | 0,3 | 0,4 | 0,6 | 0,1 | 0,3 | 0,3 | 0,8 | 0,6 | 0,6 | 0,9 | 19,2 | 0,8 |
| Gusseisen | 2,5 | 2,0 | 1,3 | 0,9 | 0,8 | 0,4 | 0,7 | 1,2 | 2,0 | 0,5 | 1,4 | 1,3 | 86,8 | 70,2 |
| Aluminiumguss | 2,7 | 18,6 | 0,6 | 1,2 | 1,6 | 0,4 | 2,6 | 1,0 | 1,9 | 0 | 0,6 | 29,6 | 4,7 | 2,3 |
| **Konzentration: 25 Vol.-%** | | | | | | | | | | | | | | |
| Kupfer | 0,9 | 1,2 | 1,0 | 0,7 | 1,2 | 0,6 | 0,2 | 0,7 | 0,9 | 0,6 | 1,0 | 9,4 | 1,0 | 4,6 |
| Weichlot 30 | 4,2 | 2,8 | 6,2 | 1,9 | 4,6 | 6,8 | 2,8 | 5,3 | 5,8 | 4,5 | 5,6 | 7,7 | 24,5 | 3,4 |
| Messing | 1,0 | 1,3 | 1,3 | 1,0 | 1,3 | 1,0 | 0,4 | 1,3 | 1,0 | 1,2 | 1,4 | 7,5 | 1,5 | 2,4 |
| Stahl | 1,2 | 1,1 | 0,4 | 0,5 | 0,5 | 0,8 | 0,1 | 0,2 | 0,8 | 0,3 | 0,3 | 0,5 | 7,4 | 2,2 |
| Gusseisen | 12,2 | 2,2 | 1,0 | 1,0 | 1,6 | 1,6 | 0,7 | 2,2 | 5,6 | 0,7 | 1,3 | 5,5 | 70,5 | 92,6 |
| Aluminiumguss | 3,1 | 21,0 | 1,1 | 0,4 | 2,4 | 1,3 | 1,3 | 1,3 | 4,6 | 5,6 | 2,1 | 32,1 | 77,4 | 10,8 |

### Tabelle IV

Ergebnisse vom Heisskorrosionstest bei den erfindungsgemässen Beispielen 1 bis 11
und den Vergleichsbeispielen I bis III
Konzentration: 25 Vol.-%    Gewichtsverlust (mg/cm²) (+ = Gewichtszunahme)

| Beispiel Nr. | 1 | 2 | 3 | 4 | 5 | 6 | 7 | 8 | 9 | 10 | 11 | I | II | III |
|---|---|---|---|---|---|---|---|---|---|---|---|---|---|---|
| Aluminium 99,5 | 94,7 | +3,9 | +5,2 | 305,2 | 1,6 | +0,8 | 0,5 | +4,1 | 2,0 | 1,7 | +5,2 | 318,1 | 5,7 | 451,5 |

Ergebnisse vom Kavitationstest bei den erfindungsgemässen Beispielen 1 bis 11
und den Vergleichsbeispielen I bis III
Konzentration: 10 Vol.-%    Gewichtsverlust (mg/h)

| Beispiel Nr. | 1 | 2 | 3 | 4 | 5 | 6 | 7 | 8 | 9 | 10 | 11 | I | II | III |
|---|---|---|---|---|---|---|---|---|---|---|---|---|---|---|
| $AlCuMg_2$ | 11,5 | 9,5 | 9,9 | 17,0 | 11,2 | 6,7 | 8,1 | 10,7 | 10,3 | 8,9 | 10,2 | 14,3 | 8,1 | 19,3 |
| Gusseisen GG25 | 3,2 | 1,6 | 1,9 | 2,6 | 3,5 | 1,4 | 1,8 | 2,6 | 2,8 | 2,1 | 2,0 | 7,1 | 247,8 | 28,8 |

## Patentansprüche

1. Nitritfreie Kühlflüssigkeit auf der Basis von Glykolen, bestehend aus
a) 0,5 bis 2,5 Gew.-% Mono- und/oder Polynitrobenzoesäuren,
b) 0,05 bis 0,4 Gew.-% Alkalinitrat,
c) 0,25 bis 2,5 Gew.-% Alkalisalze von Borsäuren,
d) 0,07 bis 0,3 Gew.-% Alkalisalze von Kieselsäuren,
e) 0,05 bis 2 Gew.-% alkalische Verbindungen, ausgewählt aus der Gruppe bestehend aus Alkalicarbonaten und Alkalihydroxiden,
f) 0,01 bis 0,2 Gew.-% Benztriazol und/oder Tolyltriazol,
g) Rest Ethylenglykole und/oder Propylenglykole mit 1 bis 3 Oxethylen- bzw. Oxpropylen-Einheiten und gegebenenfalls geringen Mengen Wasser als Lösungsvermittler,
sowie gegebenenfalls Antischamm- und Antikavitationsmittel.

2. Kühlflüssigkeit nach Anspruch 1, bestehend aus
a) 0,8 bis 1,5 Gew.-% Mono- und/oder Dinitrobenzoesäure,
b) 0,1 bis 0,3 Gew.-% Alkalinitrat,
c) 0,5 bis 1,5 Gew.-% Alkalimetaborate, Alkaliborate und/oder Alkalitetraborate,
d) 0,1 bis 0,2 Gew.-% Alkalimetasilicate und/oder Alkalipolysilicate mit 2 bis 5 Siliciumatomen,
e) 0,1 bis 1,0 Gew.-% Alkalihydroxide,
f) 0,05 bis 0,15 Gew.-% Benztriazol und/oder Tolyltriazol,
g) Rest Ethylenglykol, Diethylenglykol, Propylenglykol und/oder Dipropylenglykol und gegebenenfalls geringen Mengen an Wasser als Lösungsvermittler,
sowie gegebenenfalls Antischaum- und Antikavitationsmittel.

3. Kühlflüssigkeit nach Anspruch 1, bestehend aus
a) 0,8 bis 1,5 Gew.-% ortho-, meta- und/oder para-Nitrobenzoesäure,
b) 0,1 bis 0,3 Gew.-% Natriumnitrat,
c) 0,5 bis 1,5 Gew.-% Borax,
d) 0,1 bis 0,2 Gew.-% Natriummetasilicat, Natriumdisilicat, Natriumtrisilicat und/oder Wasserglas,
e) 0,1 bis 1,0 Gew.-% Natriumhydroxid,
f) 0,05 bis 0,15 Gew.-% Benztriazol und/oder Tolyltriazol,
g) Rest Ethylenglykol, Propylenglykol und gegebenenfalls geringen Mengen Wasser als Lösungsvermittler,
sowie gegebenenfalls Antischaum- und Antikavitationsmittel.

## Revendications

1. Liquide de refroidissement à base de glycols, sans nitrite, consistant en
a) 0,5 à 2,5% en poids d'acides mono- et/ou polynitrobenzoïques,
b) 0,05 à 0,4% en poids de nitrate alcalin,
c) 0,25 à 2,5% en poids de sels alcalins d'acides boriques,
d) 0,07 à 0,3% en poids de sels alcalins d'acides siliciques,
e) 0,05 à 2% en poids de composés alcalins, choisis dans l'ensemble constitué par des carbonates alcalins et des hydroxydes alcalins,
f) 0,01 à 0,2% en poids de benzotriazole et/ou de tolyltriazole,
g) le reste étant constitué par des éthylèneglycols et/ou des propylèneglycols comportant 1 à 3 motifs oxyéthylènes ou oxypropylènes et éventuellement de faibles quantités d'eau comme unisseur,
ainsi qu'éventuellement de l'antimousse et un agent anticavitation.

2. Liquide de refroidissement selon la revendication 1, consistant en
a) 0,8 à 1,5% en poids d'acide mono- et/ou dinitrobenzoïque,
b) 0,1 à 0,3% en poids de nitrate alcalin,
c) 0,5 à 1,5% en poids de métaborates alcalins, de borates alcalins et/ou de tétraborates alcalins,
d) 0,1 à 0,2% en poids de métasilicates alcalins et/ou de polysilicates alcalins comportant 2 à 5 atomes de silicium,
e) 0,1 à 1,0% en poids d'hydroxydes alcalins,
f) 0,05 à 0,15% en poids de benzotriazole et/ou de tolyltriazole,
g) le reste étant constitué par de l'éthylèneglycol, du diéthylèneglycol, du propylèneglycol et/ou du dipropylèneglycol et éventuellement de faibles quantités d'eau comme unisseur,
ainsi qu'éventuellement de l'antimousse et un agent anticavitation.

3. Liquide de refroidissement selon la revendication 1, consistant en
a) 0,8 à 1,5% en poids d'acide ortho-, méta- et/ou paranitrobenzoïque,
b) 0,1 à 0,3% en poids de nitrate de sodium,
c) 0,5 à 1,5% en poids de borax,
d) 0,1 à 0,2% en poids de métasilicate de sodium, de disilicate de sodium, de trisilicate de sodium et/ou de verre soluble (orthosilicate alcalin),
e) 0,1 à 1,0% en poids d'hydroxyde de sodium,
f) 0,05 à 0,15% en poids de benzotriazole et/ou de tolyltriazole,
g) le reste étant constitué par de l'éthylèneglycol, du propylèneglycol et éventuellement de faibles quantités d'eau comme unisseur,
ainsi qu'éventuellement de l'antimousse et de l'agent anticavitation.

## Claims

1. A nitrite-free cooling fluid on the basis of glycols consisting of
(*a*) 0.5 to 2.5% by weight of mono- and/or polynitrobenzoic acids,
(*b*) 0.05 to 0.4% by weight of alkali metal nitrate,

(c) 0.25 to 2.5% by weight of alkali metal salts of boric acids,

(d) 0.07 to 0.3% by weight of alkali metal salts of silicas,

(e) 0.05 to 2% by weight of alkaline compounds selected from the group consisting of alkali metal carbonates and alakli metal hydroxides,

(f) 0.01 to 0.2% by weight of benzotriazole and/or tolyltriazole,

(g) a remainder of ethylene glycols and/or propylene glycols having 1 to 3 ethoxylene or propoxylene units respectively and, if appropriate, small amounts of water as a solubilizer,

as well as, if appropriate, antifoaming agents and anticavitation agents.

2. A cooling fluid as claimed in Claim 1, consisting of

(a) 0.8 to 1.5% by weight of mono- and/or dinitrobenzoic acid,

(b) 0.1 to 0.3% by weight of alkali metal nitrate,

(c) 0.5 to 1.5% by weight of alkali metal metaborates, alkali metal borates and/or alkali metal tetraborates,

(d) 0.1 to 0.2% by weight of alkali metal metasilicates and/or alkali metal polysilicates having 2 to 5 silicon atoms,

(e) 0.1 to 1.0% by weight of alkali metal hydroxides,

(f) 0.05 to 0.15% by weight of benzotriazole and/or tolyltriazole,

(g) a remainder of ethylene glycol, diethylene glycol, propylene glycol and/or dipropylene glycol and, if appropriate, small amounts of water as a solubilizer,

as well as, if appropriate, antifoaming agents and anticavitation agents.

3. A cooling fluid as claimed in Claim 1, consisting of

(a) 0.8 to 1.5% by weight of ortho-, meta- and/or paranitrobenzoic acid,

(b) 0.1 to 0.3% by weight of sodium nitrate,

(c) 0.5 to 1.5% by weight of borax,

(d) 0.1 to 0.2% by weight of sodium metasilicate, sodium disilicate, sodium trisilicate and/or water-glass,

(e) 0.1 to 1.0% by weight of sodium hydroxide,

(f) 0.05 to 0.15% by weight of benzotriazole and/or tolyltriazole,

(g) a remainder of ethylene glycol, propylene glycol and, if appropriate, small amounts of water as a solubilizer,

as well as, if appropriate, antifoaming agents and anticavitation agents.